# EUROPÄISCHE PATENTSCHRIFT

(11) **EP 3 985 055 B1**
(45) Veröffentlichungstag und Bekanntmachung des Hinweises auf die Patenterteilung: **01.04.2026**
(21) Anmeldenummer: 21201817.0
(22) Anmeldetag: 11.10.2021
(51) Int. Cl.: C08J 11/26, C08G 77/10, C08G 77/14, C08G 77/46, C08L 83/04

(54) **UPCYCLING-VERFAHREN ZUR VERARBEITUNG VON SILIKONABFÄLLEN**
UPCYCLING METHOD FOR PROCESSING SILICONE WASTE
TRAITEMENT DE RECYCLAGE VALORISANT DESTINÉ AU TRAITEMENT DES DÉCHETS DE SILICONE

(30) Priorität: 19.10.2020 EP 20202477; 18.05.2021 EP 21174438
(43) Veröffentlichungstag der Anmeldung: 20.04.2022
(73) Patentinhaber: Evonik Operations GmbH, 45128 Essen (DE)
(72) Erfinder: Knott, Wilfried, 45355 Essen (DE); Dudzik, Horst, 45326 Essen (DE); Schaefer, Dietmar, 45529 Hattingen (DE)
(74) Vertreter: Evonik Patent Association

(56) Entgegenhaltungen:
- US-A- 5 110 972
- STEPHAN ENTHALER: "Iron-catalyzed depolymerization of polysiloxanes to produce dichlorodimethylsilane, diacetoxydimethylsilane, or dimethoxydimethylsilane", JOURNAL OF APPLIED POLYMER SCIENCE, vol. 132, no. 3, 15 January 2015 (2015-01-15), US, pages n/a - n/a, XP055644825, ISSN: 0021-8995, DOI: 10.1002/app.41287

## Beschreibung

Die Erfindung liegt auf dem Gebiet der Silikone, insbesondere betrifft sie ein Verfahren zum Upcycling von Silikonabfällen, bevorzugt von Silikon-Kleb- und/oder -Dichtstoffen, sowie von Silikonkautschuk- und von Silikonöl-Abfällen.

Silikonteile erfüllen aufgrund ihrer speziellen Materialcharakteristik besondere Anforderungen in medizinischer, pharmazeutischer und lebensmitteltechnischer Hinsicht. Sie sind bei entsprechender Verarbeitung physiologisch völlig inert. So findet man Produkte aus Silikon in Lebensmittelanwendungen, in der Medizin und in pharmazeutischen Bereichen. Babysauger und Schnuller werden ebenso aus Silikon hergestellt wie Taucherbrillen. In technischen Industrieanwendungen taucht Silikon vielfach als Werkstoff für Dichtungen auf oder in dynamischen Anwendungen für Membranen. Im Automobilbereich wird es für Schläuche, Ummantelungen oder als Kabelisolierung eingesetzt.

Bezüglich seiner mechanischen Eigenschaften hat Silikon gegenüber anderen Kautschuktypen einen entscheidenden Vorteil: Sie bleiben bei Silikon über einen sehr großen Temperaturbereich auf relativ stabilem Niveau erhalten, wohingegen sich die mechanischen Eigenschaften vieler anderer Werkstoffe bei Kälte oder Hitze stark verschlechtern. Ist beispielsweise ein EPDM-Werkstoff hinsichtlich seiner mechanischen Eigenschaften beim Blick auf das technische Datenblatt einer Silikon-Mischung überlegen, weil hier die Eigenschaften bei Raumtemperatur angegeben sind, so zeigt sich bei hohen oder niedrigen Temperaturen das komplett gegenteilige Bild. Die Temperaturbeständigkeit in Luft liegt bei Silikon dabei in etwa bei -80 °C bis ca. 250 °C. Diese Eigenschaft wird gerne für Dichtungen verwendet, da hierbei der für Silikon typische, sehr niedrige Druckverformungsrest zum Tragen kommt.

Aufgrund ihrer exzellenten Ozon-, UV- und Witterungsbeständigkeit werden Mischungen aus Silikon zudem häufig in Außenanwendungen eingesetzt. Darüber hinaus ist Silikon sehr schwer entflammbar und sowohl gut elektrisch isolierfähig wie auch gut elektrisch leitfähig. Chemisch beständig ist Silikon z. B. gegenüber Pflanzen- und Tierfetten, heißem Wasser und Alkohol. Die Beständigkeit ist eingeschränkt gegenüber Säuren, Laugen, Kraftstoffen und Ketonen sowie Wasserdampf. Silikon hat zudem eine sehr hohe Gasdurchlässigkeit.

Neben industriellen Anwendungen wird Silikon seit Jahrzehnten als bevorzugtes Elastomer im medizinischen Bereich gewählt. Komponenten aus Silikon werden dabei auch als Kurz- (für weniger als 30 Tage in Medizinprodukten der Klasse IIa) oder Langzeitimplantate (für 30 Tage oder mehr in Medizinprodukten der Klasse IIb verwendet) und erfüllen dort kritische Funktionen in Geräten wie Herzkathetern, Herzschrittmachern, Beatmungsgeräten, Neurostimulatoren oder Defibrillatoren.

Silikonkautschuk, der für Langzeitimplantate eingesetzt werden soll, wird weltweit nur von sehr wenigen Produzenten angeboten (z. B. von NuSil Technology). Die Herstellung der Mischungen erfolgt dabei unter strengen Auflagen der U.S. Food and Drug Administration (FDA). Auch bei der Verarbeitung muss auf besondere Reinheit geachtet werden und eine Komponentenproduktion im Reinraum stattfinden.

Ein wichtiger Vorteil von Silikon ist dabei, dass er biokompatibel ist und somit eine gute Verträglichkeit für den Menschen aufweist. Die Biokompatibilität einer Silikonmischung wird häufig durch USP Class VI-Einstufungen nachgewiesen (USP steht für United States Pharmacopeia) oder durch Tests gemäß der strengeren (DIN EN) ISO 10993 Richtlinie. Die (DIN EN) ISO 10993 dient dabei vor allen Dingen dem Testen von Medizinprodukten, die für lange Zeit oder permanent im menschlichen Körper implantiert werden. Für kürzere Anwendungen ist die Einstufung nach USP Class VI oder ggf. eine niedrigere Einstufung ausreichend.

Darüber hinaus bietet Silikon aufgrund seiner Eigenschaft, in einem weiten Temperaturbereich von etwa -80 °C bis ca. 250 °C eingesetzt werden zu können, die Möglichkeit zur Dampfsterilisation (Erhitzen im Autoklaven). Produkte aus Silikon können so von lebenden Mikroorganismen, deren Dauerformen, Viren etc. befreit werden. Auch die guten elektrischen Isolationsfähigkeiten von Silikon sind im medizinischen Bereich von besonderer Bedeutung.

Durch Variation der eingesetzten Silikonkautschuke und der Vernetzungsarten können Silikone besondere Eigenschaften erhalten. So sind HTV-Silikonkautschuke in einem breiten Temperaturbereich von -50 °C bis zu 200 °C, teilweise bis zu 300 °C flexibel und beständig. Sie finden sich in Dichtungen der Automobil- oder Lebensmittelindustrie, in Kabelummantelungen oder als Dämpfungsmaterial.

RTV-Silikonkautschuke werden vor allem aufgrund ihrer Wärmeleitfähigkeit und elektrischen Isolierfähigkeit geschätzt, weshalb sie vorzugsweise im Elektro- und Elektronikbereich eingesetzt werden.

Flüssig-Silikone (auch LSR, *liquid silicone rubber*) haben gegenüber den HTV- und RTV-Silikonkautschuken eine niedrigere Viskosität. Sie können im Spritzgussverfahren in unterschiedlichste Formen gebracht werden und z.B. zu Silikonschläuchen verarbeitet werden. Da LSR-Silikone immer platinvernetzt hergestellt werden, können Produkte auf der Basis von Flüssigsilikonen in medizintechnischen Bereichen eingesetzt werden.

Dank seiner hohen Stabilität innerhalb des menschlichen Körpers stellt Silikon somit einen sehr guten Schutz kritischer Komponenten dar und wird aufgrund der genannten Eigenschaften zudem bevorzugt für funktionale Teile eingesetzt.

Grundsätzlich liegt der Unterschied von Silikonkautschuk im Vergleich zu anderen organischen Elastomeren darin, dass seine Hauptketten, die eine anorganische Struktur aufweisen, nicht aus Kohlenstoffverbindungen bestehen, sondern aus Kombinationen von Silizium- und Sauerstoffatomen gebildet wird, wobei als Füllstoff vor allem pyrogene Kieselsäure zur Ausbildung guter Eigenschaften verwendet wird.

Entsprechend ihrer Aggregatszustände sowie ihrer Vulkanisationstemperaturen lassen sich Silikonkautschuke in drei Gruppen gliedern:
Als HTV (high temperature vulcanizing) oder HCR (high consistency rubber) bezeichnet man Silikonkautschuke, deren Rohmaterial fest ist. Sie werden bei hohen Temperaturen üblicherweise zwischen 140 °C und 200 °C vulkanisiert. Die Vernetzung erfolgt durch Peroxide oder durch Additionsreaktion, wobei Platinverbindungen als Katalysator eingesetzt werden.

Flüssigsilikon oder LSR (Liquid Silikon Rubber) ist als Rohmaterial (zäh-)flüssig und besteht aus zwei Komponenten, die direkt vor der Verarbeitung gemischt werden. Die Vernetzung erfolgt durch Additionsreaktion bei ähnlichen Temperaturen wie bei den HTV-Typen, wobei die Vernetzung generell wesentlich schneller erfolgt.

Beide Silikon-Typen können eingefärbt werden. Fertige Elastomer-Artikel aus HTV-Silikon und LSR-Silikon unterscheiden sich in ihren Eigenschaften kaum.

Die dritte Gruppe sind sogenannte RTV-Silikone (room temperature vulcanizing). Bei diesen geschieht die Vernetzung bereits bei Raumtemperatur. Sie werden gerne als Kleb- und/oder Dichtungsmasse oder in der Prototypenfertigung verwendet. Verfügbar sind sie sowohl aus Ein- wie auch als Zweikomponentensysteme.

So vorteilhaft die aus der besonderen chemischen Stabilität der Silikone ableitbaren Gebrauchseigenschaften für die Nutzungsdauer der daraus gefertigten Gegenstände sind, so belastend ist deren Stabilität bei der Entsorgung der Silikone am Ende ihres Life-Cycles (End-of-Life-Silikone bzw. Silikonabfälle).

In der europäischen Patentanmeldung EP3744774 A1 wird ausführlich dargelegt, dass die im bisherig bekannten Stand der Technik beschriebenen Versuche und Arbeiten zum Recycling von Silikonabfällen nur mangelhafte Ergebnisse zeitigen. Da es an einer technisch gangbaren und attraktiven Route, sowohl Silikonöle als auch feste Silikone stofflich zu recyclen, mangelte, wurde in der europäischen Patentanmeldung EP3744774 A1 ein Verfahren für das Recycling von Silikonen durch deren chemische Transformation in Acetoxygruppen aufweisende Siloxane und/oder Silane vorgeschlagen, wobei man die zu recycelnden Silikone einer Wärmebehandlung in Aufschlusssystemen, umfassend Essigsäureanhydrid und/oder Acetoxysiloxan, sowie zumindest eine Brönstedtsäure, vorzugsweise unter Zusatz von Essigsäure unterzieht.

In Iron-catalyzed depolymerization of polysiloxanes to produce dichlorodimethylsilane, diacetoxydimethylsilane or dimethoxydimethylsilane, S. Enthaler, J. Appl. Polym. Sci., 2015, Bd 132, app. 41287, wird ein Verfahren für die Depolymerisation von Polysiloxanen unter Eisensalz-Katalyse mit Essigsäureanhydrid im Temperaturbereich zwischen 140°C und 180°C und einer Reaktionszeit von 16 Stunden beschrieben.

EP 3 744 754 A1 beschreibt die Verwendung von sauren, endäquilibrierten Acetoxygruppen tragenden Siloxanen für die Herstellung von SiOC-verknüpften Polyethersiloxanen für deren Einsatz u.a. in PU-Schaumstabilisatoren oder zur Herstellung von Klebstoffen oder Dichtstoffen.

Aufgabe der vorliegenden Erfindung war vor diesem Hintergrund die Darbringung eines Upcycling-Verfahrens zur Nutzbarmachung von Silikonabfällen bzw. End-of-Life-Silikonen als Ressource für die Bereitstellung hochwertiger Si-Produkte, insbesondere auf die Herstellung grenzflächenaktiver Substanzen fokussierend.

Im Rahmen der vorliegenden Erfindung wird nun von den Erfindern vor dem in der noch nicht veröffentlichten europäischen Patentanmeldung mit dem Anmeldeaktenzeichen 19176869.6 geschilderten Hintergrund ein entsprechendes Upcycling-Verfahren zur Nutzbarmachung von Silikonabfällen bzw. End-of-Life-Silikonen bereitgestellt. Es ermöglicht die Nutzbarmachung von Silikonabfällen bzw. End-of-Life-Silikonen als Ressource für die Bereitstellung neuer hochwertiger Si-Produkte, insbesondere auf die Herstellung grenzflächenaktiver Substanzen fokussierend. Durch eine gezielte Transformation der Silikonabfälle bzw. End-of-Life-Silikone werden besonders hochwertige endäquilibrierte Acetoxygruppen tragende Siloxane mit Kettenlängen größer 3 Siliziumatome erzeugt, die unmittelbar als Ausgangsmaterial für die Synthese neuer hochwertiger Silikonprodukte genutzt werden können, insbesondere mit Blick auf die Herstellung grenzflächenaktiver Substanzen.

Gegenstand der vorliegenden Erfindung ist vor diesem Hintergrund ein Upcycling-Verfahren zur Herstellung von sauren, endäquilibrierten Acetoxygruppen tragenden Siloxanen mit Kettenlängen größer 3 Siliziumatomen aus End-of-Life-Silikonen, insbesondere umfassend Silikon-Kleb- und/oder -Dichtstoffe und/ oder Silikonkautschuk- und/oder Silikonöl-Abfälle, durch thermischen Aufschluss der End-of-Life-Silikone in einem sauren Reaktionsmedium, umfassend Essigsäureanhydrid, Essigsäure sowie zumindest eine weitere Brönstedtsäure mit einem pKa-Wert < 4, wobei der Aufschluss in einem Reaktor erfolgt, dessen Volumen mindestens 1 Liter beträgt.

Insbesondere erfolgt der Aufschluss in einem Reaktor, dessen Volumen mindestens 5 Liter, insbesondere mindestens 12 Liter beträgt, und vorzugsweise maximal 500000 Liter beträgt.

Weiterhin ist es bevorzugt, dass der Aufschluss ohne Wasserabtrennung durchgeführt wird.

Im Rahmen der vorliegenden Erfindung haben die Erfinder festgestellt, dass Essigsäureanhydrid diejenige Systemkomponente darstellt, die für die Acetoxyfunktionalisierung des zu verarbeitenden Siloxans verantwortlich ist.

Setzt man zum Beispiel Dekamethylcyclopentasiloxan als Modellsystem allein mit Essigsäure (2 mol Essigsäure bezogen auf 15 mol-D-Einheiten) und 0,2 Massenprozent Trifluormethansulfonsäure bei 120°C im Laufe von 6 Stunden mit aufgesetztem Rückflusskühler um, so isoliert man danach eine hochviskose Flüssigkeit, die im ²⁹Si-NMR-Spektrum neben den für lineare Polydimethylsiloxane typischen Signallagen für D-Einheiten und der deutlichen Präsenz von Oktamethylcyclotetrasiloxan (D₄, δ = -19,1 ppm) auch noch eine Spur an =SiOH indiziert, jedoch keinerlei Hinweis auf ein Acetoxymodifiziertes Polydimethylsiloxan gibt.

Dieser am Modellsystem erhaltene Befund lässt sich ebenfalls bestätigen bei dem Versuch, aus einem End-of-Life-Silikon ein α,ω-Diacetoxypolydimethylsiloxan herzustellen.

Setzt man im Laufe von 6 Stunden und bei einer Umsetzungstemperatur von 120°C ausschließlich reine Essigsäure kombiniert mit 0,2 Gewichtsprozent Trifluormethansulfonsäure zum Aufschluss von ausgehärteten Dichtmaterial (Kartuschensilikon) ohne Wasserabtrennung ein (aufgesetzter Rückflusskühler), so findet überhaupt keine Anknüpfung von Acetoxygruppen an das Siloxan statt, wie das Ausbleiben des für Acetoxygruppen tragende Polydimethylsiloxanketten charakteristischen ²⁹Si-NMR-Signals bei einer chemischen Verschiebung von ca. - 9,2 ppm unterstreicht.

Führt man hingegen erfindungsgemäß an dem betreffenden ausgehärteten Dichtmaterial einen 6 stündigen Aufschluss mit aufgesetztem Rückflusskühler bei einer Umsetzungstemperatur von 120°C unter Zusatz der entsprechenden Menge Essigsäureanhydrid und unter Hinzufügen von 0,2 Gewichtsprozent Trifluormethansulfonsäure sowie 3 Gewichtsprozent Essigsäure durch, so zeigt die erhaltene leichtbewegliche Flüssigkeit das für Acetoxygruppen tragende Polydimethylsiloxanketten charakteristische ²⁹Si-NMR-Signal bei einer chemischen Verschiebung von ca. - 9,2 ppm. Das Verhältnis der Signalintensitäten belegt zudem, dass die angestrebte Kettenlänge von N = 14 erzielt wurde.

Das mit dem erfindungsgemäß beanspruchten Upcycling gewonnene, Acetoxy-modifizierte Siloxan ist endäquilibriert, was sich insbesondere in solchen Recyclingansätzen leicht zeigen lässt, bei denen man aus Gründen besserer Durchmisch- und Rührbarkeit dem aufzuschließenden festen Silikonkautschuk noch eine entsprechende Menge an flüssigem Dekamethylcyclopentasiloxan hinzugefügt hat.

Reaktionsbegleitend gezogene ²⁹Si-NMR-Proben belegen, dass das bei einer chemischen Verschiebung von - 21,5 ppm angesiedelte D₅-Signal im Reaktionsverlauf zurückgeht, während das anfänglich nicht beobachtete D₄-Signal bei -19,1 ppm erscheint und in seiner Intensität stark zunimmt.

Mit dem Begriff "endäquilibriert" ist im Sinne der Erfindung gemeint, dass das Äquilibriergleichgewicht erreicht wurde, das sich bei einer Temperatur von 23°C und einem Druck von 1013,25 hPa einstellt. Als Indikator für das Erreichen des zuvor genannten Äquilibriergleichgewichtes wird der gaschromatographisch bestimmte Gesamtcylengehalt definiert als die Summe der D₄-, D₅-, D₆-Gehalte bezogen auf die Siloxanmatrix und festgestellt nach der Derivatisierung der aus dem erfindungsgemäßen Aufschluss gewonnenen α,ω-Diacetoxy-polydimethylsiloxane zu den entsprechenden α,ω-Diisopropoxypolydimethylsiloxanen herangezogen. Die Derivatisierung zu den α,ω-Diisopropoxypolydimethylsiloxanen wird hierbei bewusst gewählt, um eine unter den Bedingungen der gaschromatographischen Analyse gegebenenfalls erfolgende, thermisch induzierte Rückspaltungsreaktion der α,ω-Diacetoxy-polydimethylsiloxane zu verhindern (zur Rückspaltungsreaktion siehe u.a. J. Pola et al., Collect. Czech. Chem. Commun. 1974, 39(5), 1169-1176 und auch W. Simmler, Houben-Weyl, Methods of Organic Chemistry, Vol. VI/2, 4th Edition, O-Metal Derivates of Organic Hydroxy Compounds S. 162 ff)).

Erfindungsgemäß soll der darin enthaltene Gesamtcyclengehalt definiert als Summe der Gehaltsanteile der zyklischen Siloxane umfassend D₄, D₅ und D₆ bezogen auf die Siloxanmatrix bevorzugt kleiner 13 Gewichtsprozent, besonders bevorzugt kleiner 12 Gewichtsprozent an der aus α,ω-Diisopropoxypolydimethylsiloxanen bestehenden Siloxanmatrix aufweisen.

Der erfindungsgemäße Einsatz der Essigsäure ermöglicht hier die problemlose Unterschreitung sonst üblicher Gleichgewichtsanteile von 13 Gewichtsprozent des Gesamtcyclengehaltes bei den linearen α,ω-Diacetoxypolydimethylsiloxanen.

Gemäß einer bevorzugten Ausführungsform führt man die Umsetzung zunächst in einem Temperaturbereich von 40 bis 120°C und danach zur Sicherstellung der Endäquilibrierung im Temperaturbereich von 140 bis 160°C und hierbei bevorzugt über einen Zeitraum von 4 bis 10 Stunden durch.

Die Erzielung des Äquiilibriergleichgewichtes bei den erfindungsgemäß hergestellten sauren, endäquilibrierten Acetoxygruppen tragenden Siloxanen mit Kettenlängen größer 3 Siliziumatomen ermöglicht deren erfolgreiche Weiterverarbeitung als Reaktivsiloxan in tensidisch wirksamen Copolymeren.

So gelangt man durch die Umsetzung von erfindungsgemäßen Acetoxygruppen tragenden Siloxanen mit Polyethern zu SiOC-verknüpften Polyethersiloxanen, die als grenzflächenaktive Substanzen Eingang in wichtige technische Anwendungen nehmen.

Die tensidische Wirksamkeit dieser copolymeren Verbindungen lässt sich qualitativ über den sogenannten HLB-Wert (hydrophilic-lipophilic-balance) beschreiben, der der chemischen Struktur der tensidisch wirksamen Substanz mit Hilfe eines Gruppen-Inkrementsystems einen Zahlenwert zuordnet und zum Ausdruck bringt, welchen Anteil der Siloxanpart und der Polyetherpart hierbei tragen. So wird die numerisch beschreibbare Wirksamkeit einer Polyether(sub)struktur von der Natur und Anzahl der darin eingebauten Monomeren (wie z.B. Ethylenoxid- und Propylenoxid) aber auch von der Natur der Endgruppe (wie z.B. Hydroxyl- vs. Alkoxygruppe) bestimmt. Die Berechnung der HLB-Werte speziell für Polyether, die sich von Polyoxyethylen-Polyoxypropylen -Strukturen ableiten, lässt sich zum Beispiel nach der von X. Guo et al. verfeinerten Gruppeninkrement-Methode nach Davies (J. Colloid Interface Science 298, 441-450 (2006) herleiten.

Für den tensidischen Wirksamkeitsbeitrag des Siloxanparts ist hingegen die Kettenlänge, das heißt die Anzahl der im Siloxangerüst vertretenen Siliziumatome, insbesondere die Anzahl der Wiederholungseinheiten und hier speziell der D-Einheiten (Dimethylsiloxyfunktionen) entscheidend.

Erfahrungsgemäß tragen dimethylsilanische (Sub)Strukuren, das heißt, solche mit nur einem Si-Atom, als auch die niedersten Vertreter der Polydimethylsiloxanreihe mit nur 2 oder 3 sich wiederholenden Dimethylsiloxystrukturen praktisch Nichts zur tensidischen Wirksamkeit hiervon abgeleiteter Polyetherderivate zum Beispiel in Entschäumern und/ oder Entlüftern bei, sondern es verhält sich oftmals sogar so, dass diese stark diffundierenden, niedermolekularen Copolymere in aushärtenden Beschichtungssystemen zu unerwünschten Störungen, wie zum Beispiel Restklebrigkeit (durch Migration an die Oberfläche) führen können.

In diesem Zusammenhang ist neben der Betrachtung der spezifischen chemischen Copolymerzusammensetzung dem Fachmann vertraut, dass tensidisch genutzte Polyethersiloxane nur dann ihre optimale Wirksamkeit entfalten, wenn die zugrunde liegende Siloxanstruktur in ihrer Polymerzusammensetzung einem Äquilibrat entspricht.

Wie aus dem Vorgesagten klar erkennbar ist, richtet sich somit, den Upcycling-Gedanken von Silikonabfällen speziell auf die Herstellung grenzflächenaktiver Substanzen fokussierend, die erfindungsgemäße Lehre im Einklang mit dem im Hauptanspruch dargelegten Upcycling-Verfahren auf endäquilibrierte Acetoxygruppen tragende Siloxane mit Kettenlängen größer als 3 Siliziumatome.

Im Rahmen der Erfindung können grundsätzlich alle Silikone dem Upcycling erfolgreich zugeführt werden, insbesondere Silikonkautschuk und/ oder Silikonöle. Insbesondere gilt das für die Gesamtheit der im einleitenden Beschreibungsteil angeführten Silikone. Auf diese wird hiermit ausdrücklich Bezug genommen.

Gemäß einer bevorzugten Ausführungsform der Erfindung betrifft das erfindungsgemäße Verfahren ein Verfahren zum Upcycling von Silikonabfällen, insbesondere von Silikon-Kleb- und/oder -Dichtstoffen, Silikonkautschuk-Abfällen und/ oder Silikonöl-Abfällen, wobei vorzugsweise Hexamethyldisiloxan ausgenommen ist. Gemäß einer bevorzugten Ausführungsform der Erfindung sind die zu verwertenden Silikonabfälle, insbesondere Silikonöle aus D- und M-Einheiten zusammengesetzt. Gemäß einer weiteren bevorzugten Ausführungsform der Erfindung weisen die zu verwertenden Silikone Molmassen > 236 g/ mol auf.

Gemäß einer besonders bevorzugten Ausführungsform der Erfindung zeichnet sich das Upcycling-Verfahren dadurch aus, dass die End-of-Life-Silikone Silikon-Kleb- und/oder Silikon-Dichtstoffe umfassen, vorzugsweise Silikon-Kleb- und/oder Silikon-Dichtstoff-Kartuschen betreffen, insbesondere Silikon-Kleb- und/oder Silikon-Dichtstoff-Reste in und/oder an PE-Behältnissen, bevorzugt umfassend HDPE und/oder LDPE, betreffen. Übliche Silikon-Kleb- und/oder Silikon-Dichtstoff-Kartuschen umfassen eine Silikon-Kleb- und/oder Silikon-Dichtstoffmasse in einem Polyethylen-Behältnis (PE-Behältnis), welches ein Herausdrücken der Silikon-Kleb- und/oder Silikon-Dichtstoffmasse ermöglicht, wobei der Behältnis-Mantel gewöhnlich aus HDPE (High Density Polyethylene) und die halbtransparenten Behältnis-Teile (Kolben und Ausdrückspitze) gewöhnlich aus LDPE (Low Density Polyethylene) gefertigt sind. HDPE und LDPE sind dem Fachmann bekannt. HDPE weist eine hohe Dichte zwischen 0,94 g/cm³ und 0,97 g/cm³ auf; LDPE weist eine demgegenüber geringere Dichte zwischen 0,915 g/cm³ und 0,935 g/cm³ auf.

Das erfindungsgemäße Verfahren ermöglicht somit als weiteren erheblichen Vorteil auch noch die im Wesentlichen sortenreine Rückführung von Polyethylen, insbesondere High Density Polyethylene (HDPE), welches aus vorzugsweise gebrauchten Silikon-Kleb- und Silikon -Dichtstoffkartuschen stammt. Es ermöglicht ganz allgemein die Verwertung Silikon-kontaminierter PE-Abfälle unter Bereitstellung saurer, endäquilibrierter Acetoxygruppen tragender Siloxane mit Kettenlängen größer 3 Siliziumatomen unter im Wesentlichen sortenreiner Rückgewinnung von Polyethylen.

Wie bedeutend und groß das spezielle Problem einer Silikonkontamination in HDPE-Abfällen ist, geht unter anderem aus einer Studie von Ketenakkoord Kunststofkringloop en Afvalfonds Verpakkingen "Kitkokers in een circulaire economie", Autoren I. Gort und S. Haffmans vom 01.05.2017 hervor (erhältlich vom Kennisinstituut Duurzaam Verpakken, Zuid Hollandlaan 7, 2596 AL Den Haag, Niederlande, oder deren Internetauftritt unter https://kidv.nl/ und zwar https://kidv.nl/media/rapportages/kitkokers_in_een_circulaire_economy.pdf?1.1.2-rc.1) die verdeutlicht, welche dramatischen Effekte kleine Silikonverunreinigungen auf die Wiederverwendbarkeit aus Abfall gewonnenen Re-Granulats haben. So wandern Silikonanteile selbst durch die feinen, 150-µm-Schmelzsiebe eines Granulat erzeugenden Extruders hindurch und gelangen dabei ins Re-Granulat und verursachen letztlich Produktionsfehler beim Kunststoffverarbeiter der beispielsweise Kunststoffschläuche blasextrudiert. Man konstatiert, dass bereits ein Silikonkörnchen Oberflächendefekte und Löcher im Polymer hervorrufen kann, so dass hierdurch gegebenenfalls eine komplette, stundenwährende Produktionscharge unbrauchbar wird. Das kontaminierte HDPE ist von minderwertiger Qualität und kann somit auch nur noch für unkritische Zwecke verwendet werden.

Akzeptabel sind diese silikonkontaminierten Kartuschenrecyclate derzeit nur bei der Verarbeitung zu groben Objekten wie Dämmwänden, Gerüstbohlen, Begrenzungspfosten, Eisenbahnschwellen und Picknicktischen, bei denen die Präsenz von Silikonteilchen weniger auffällt, da man hierbei nicht zwingend eine glatte Oberfläche erwartet. In die stoffliche Wiederverwertung der Silikonkomponente setzt bezeichnete Studie allerdings keine Hoffnung.

Die Silikonreste insbesondere gebrauchter und somit teilentleerter Silikondichtstoffkartuschen kleben und das noch abhängig vom Stadium des Durchhärtungsprozesses üblicherweise hartnäckig an der sie umgebenden Kartuschenwandung sowie an dem Ausdrückkolben und an der Ausdrückspitze der Kartusche fest und lassen sich nicht einfach und schon gar nicht in Gänze von dem überwiegend eingesetzten HDPE abtrennen. Nach Angaben der Studie bestehen grundsätzlich alle Teile einer Dichtstoffkartusche aus Polyethylen, wobei der Mantel aus HDPE und die halbtransparenten Teile (Kolben und Ausdrückspitze) oft aus LDPE (Low Density Polyethylene) gefertigt sind.

Erfindungsgemäß wurde nun überraschenderweise festgestellt, dass man die in der Kartusche verbliebenen durchgehärteten Silikonreste vollständig von HDPE und LDPE lösen kann, indem man die vorzugsweise zerkleinerte, z.B. in kleine Stücke zerschnittene Dichtstoffkartusche einem thermischen Aufschluss in einem sauren Reaktionsmedium, umfassend Essigsäureanhydrid, Essigsäure sowie zumindest eine weitere Brönstedtsäure mit einem pKa-Wert < 4 unterzieht.

Hierbei lösen sich die Silikonreste vollständig vom Trägermaterial ab, welches dann durch Filtration und gegebenenfalls noch Waschung(en) und Trocknung als nahezu sortenreines, silikonfreies HDPE bzw. LDPE gewonnen wird.

Das hierbei abgelöste Silikon wird erfindungsgemäß in ein saures, endäquilibriertes Acetoxygruppen tragendes Siloxan mit einer Kettenlänge größer 3 Siliziumatomen transformiert.

Somit eröffnet der erfindungsgemäß aufgefundene Weg zusätzlich die technische Möglichkeit, neben sortenreinem HDPE auch noch im Sinne eines Upcyclings aus minderwertigen, problematischen Silikonabfällen hochwertige Reaktivsiloxane zu gewinnen, die zu wertvollen, grenzflächenaktiven Additiven verarbeitet werden können.

End-of-Life-Silikondichtstoffkartuschen können mit ihren Silikonanhaftungen vorteilhafterweise zunächst durch Kontakt zum Beispiel mit flüssigem Stickstoff oder auch Trockeneispellets kaltversprödet, das heißt, in ihrer Elastizität deutlich abgesenkt und dann geeignet zerkleinert werden. Die Zerkleinerung kaltversprödeter Silikondichtstoffkartuschen kann zum Beispiel mit Hilfe eines Brechers, eines Schredders, einer Mühle, eines Hammerwerks, mit Hilfe von Walzen oder einem Knetwerk oder auch mit Hilfe schneidender Maschinen erfolgen. Am Ende der Zerkleinerung besitzt das kleinstückige, silikonbehaftete Kartuschenmaterial bevorzugt Kantenlängen von 1 bis 10 mm, insbesondere von 3 bis 6 mm. Erfindungsgemäß bevorzugt unterzieht man das zerkleinerte Material sofort einem thermischen Aufschluss in einem sauren Reaktionsmedium, umfassend Essigsäureanhydrid, Essigsäure sowie zumindest eine weitere Brönstedtsäure mit einem pKa-Wert < 4.

Weniger bevorzugt, kann man jedoch auch zum Beispiel in Anlehnung an die Lehre der WO 2008/097306 A1 das kleinstückige, silikonbehaftete Kartuschenmaterial zunächst einer Vortrennung unterwerfen, indem man dieses in eine Flüssigkeit einbringt, deren Dichte zwischen der des Silikons und des Kartuschenkunststoffs liegt und somit zu einer Dichteseparation von Kartuschenmaterial und Silikonanteilen führt (entspricht der Bildung dichteseparierter Schichten).

Die Grenzen dieser Art von Vorseparation werden unter anderem in der Studie von Ketenakkoord Kunststofkringloop en Afvalfonds Verpakkingen (s.o., S. 22 und 34) aufgezeigt. So sinkt die Trennschärfe in der Dichteseparation zum Beispiel durch okkludierte Lufteinschlüsse im Silikon, die Auftrieb verursachen und dazu führen, das mehr oder minder große Anteile an Silikon auch wieder in der Kunststoffschicht landen.

Erfindungsgemäß wird der thermische Aufschluss in einem sauren Reaktionsmedium in einem Reaktor von mindestens einem Liter Volumen durchgeführt. Der aggressiven Natur des erfindungsgemäßen Reaktionsmediums Rechnung tragend, wird das Reaktormaterial vorzugsweise aus Glas oder Keramik, bevorzugt aus Metall, vorzugsweise hochlegierten Edelstählen, besonders bevorzugt aus Hastelloy ausgewählt.

Der Reaktor selbst sollte - sofern nicht elektrisch beheizt- bevorzugt über einen Heizmantel verfügen, der die Ankoppelung an einen geeigneten Wärmeträgerkreislauf (zum Beispiel auf Basis von Wärmeträgeröl- oder Heißdampf) gestattet.

Vorzugsweise wird das kleinstückige, silikonbehaftete Kartuschenmaterial im Sinne intensiver Kontaktierung und erleichterter Ablösung des Silikons von HDPE/ LDPE im sauren Reaktonsmedium durch die Nutzung eines effektiven Rührorgans bewegt.

Sollten im Silikondichtstoff Füllmaterialien enthalten sein, so werden diese ebenfalls durch die An-, Ab- und Auflösung des Silikons vom HDPE bzw. LDPE frei. Am Ende des erfindungsgemäßen Aufschlusses lassen sich die kleinstückigen HDPE- bzw. LDPE-Teilchen zum Beispiel mit Hilfe eines groben Siebes vom flüssigen, Füllmaterial durchsetzten Reaktivsiloxan filtrierend abtrennen, das man darauf beispielsweise durch ein Absitzenlassen von dem festen, feinteiligen Füllstoff scheiden kann.

Erfindungsgemäß und ohne die vorgestellte Lehre zu schmälern, lassen sich zur vorteilhaften Ausgestaltung für die hier angesprochenen verfahrenstechnischen Basisoperationen naturgemäß auch noch weitere Lösungen finden, wie zum Beispiel ein Abfiltrieren oder ein Zentrifugalabscheiden des Füllstoffes vom Reaktivsiloxan.

Spuren an Silikon lassen sich von den kleinstückigen HDPE- bzw. LDPE-Teilchen durch geeignete Waschung, zum Beispiel durch das innige Kontaktieren mit Lösungsmitteln, Abtrennen derselben und anschließende Trocknung des/ der sortenreinen Polymer(en)s beseitigen.

Der Begriff der End-of-Life-Silikone umfasst im Rahmen der erfindungsgemäßen Lehre alle silikonbasierten oder Silikon-enthaltenden Produkte sowie Produkte mit Silikonanhaftungen bzw. Silikonverunreinigungen, die jeweils ihre technische Lebensdauer oder Haltbarkeit nahezu und/oder bereits vollständig erreicht haben oder aber aus einem anderen Grunde für die Entsorgung vorgesehen wären. Die Haltbarkeit oder Lebensdauer bezeichnet dabei die Zeit, die ein Material oder ein Gegenstand ohne den Austausch von Kernkomponenten oder komplettes Versagen genutzt werden kann. Hierzu zählen im Rahmen der Lehre auch diejenigen Silikon-Kleb- und Silikon-Dichtstoffe zum Beispiel in Kartuschen, deren Haltbarkeits- oder Verfalldatum beinahe erreicht und/ oder überschritten ist (bewertet nach dem zu erwartenden und/ oder bereits eingetretenen Stadium der Aushärtung), sowie zum Beispiel auch mehr oder minder alte Anguss- und/ oder Stanzabfälle aus der Silikonkautschuk-Produktion oder ebenfalls auch ausrangierter Elektronikschrott, der silikonversiegelte Bauteile/ Bauteilgruppen enthält. Der Begriff der End-of-Life-Silikone umfasst im Rahmen der erfindungsgemäßen Lehre außerdem alle Silikonabfälle, auch Produktionsabfälle. Er umfasst insbesondere all jene Silikone oder silikonhaltigen Teile oder Teile mit Silikonanhaftungen oder Silikonanschmutzungen, die ansonsten für die gewöhnliche Entsorgung vorgesehen sind und demgemäß als Abfall betrachtet werden. Er umfasst somit z.B. auch für die Entsorgung vorgesehene Silikon-Kleb- und/oder -Dichtstoff-Kartuschen, insbesondere gebrauchte Silikon-Kleb- und/oder - Dichtstoff-Kartuschen, in und an welchen noch Silikonreste kleben oder vorhanden sind. Die Begriffe der "Silikonabfälle" und der "End-of-Life-Silikone" können im Sinne dieser Erfindung synonym verstanden werden.

Der Begriff des "thermischen Aufschlusses" meint im Sinne der vorliegenden Erfindung den Vorgang der Transformation der End-of-Life-Silikone in dem erfindungsgemäßen Reaktionsmedium in saure, endäquilibrierte Acetoxygruppen tragende Siloxane mit Kettenlängen größer 3 Siliziumatomen unter Zufuhr thermischer Energie, insbesondere umfassend eine entsprechende Wärmebehandlung der End-of-Life-Silikone bei Temperaturen zwischen 50°C und 200°C.

Einige Schriften des Standes der Technik widmen sich der De-Silikonisierung von Bauteilen, die im Bereich von Elektronikteilen oder des ausrangierten Elektronikschrotts (JP H04 318075 A und US 6.652.665 B1) oder aber bei Kunstfasergeweben aus Polyamid oder Polyester speziell für Airbags (US 2010/0012623 A1 und EP 0950684 A2) anzusiedeln sind.

So lehrt die JP H04 318075 A die Ablösung ausgehärteter Silikonharze von harten, unempfindlichen Substraten bei Raumtemperatur wie zum Beispiel Glas-Epoxy-Trägern und keramischen Trägern mit Hilfe einer Mischung bestehend aus , aliphatischen Kohlenwasserstoffen, chlorierten aliphatischen Kohlenwasserstoffen und monozyklischen Aromaten, Aceton, Methylethylketon, Cyclohexanon, Essigsäure - n-Butylacetate oder einer Mischung bestehend aus den genannten Solventien oder Tetrahydrofuran mit Dodecylbenzolsulfonsäure, wobei der Solvensanteil im Bereich von 40 bis 90 Gewichtsprozent und der Anteil an Dodecylbenzolsulfonsäure im Bereich von 60 bis 10 Gewichtsprozent rangieren.

Die Lehre der US 6.652.665 B1 zielt auch auf die Entfernung von Silikonablagerungen von elektronischen Teilen und setzt als Waschlösung hierfür quaternäre Ammoniumfluoride in einem Hydroxylgruppen-freien, aprotischen Lösungsmittel ein.

Mignani stellt in der US 2010/0012623 A1 auf ein Delaminierverfahren für Gegenstände wie Airbags ab, bei dem das Silikon-beschichtete Substrat mit einer wässrigen Lösung eines Alkali- oder Erdalkalimetallhydroxid in Gegenwart eines Phasentransferkatalysators gegebenenfalls noch unter Wärmebehandlung durch Auflösen oder Suspendieren vom Silikon getrennt wird.

Auch auf das Nutzbarmachen des speziell in Airbagabfällen enthaltenen Wertstoffs Polyamid abstellend, beschäftigt sich die EP 0950684 A2 mit der Aufbereitung silikonharzhaltigen Polyamidmaterials durch Behandeln desselben mit Alkalihydroxid unter Erwärmung, Abtrennung des festen Materials von der Lösung und Neutralisation des festen Materials mit phosphoriger Säure.

Keines der genannten de-silikonisierenden Verfahren beschäftigt sich indes mit der wertstiftenden Transformation der zu entfernenden Silikonkomponente und dabei noch in Sonderheit mit der Bereitstellung hochwertiger Si-Produkte, insbesondere zur Herstellung grenzflächenaktiver Substanzen.

Das erfindungsgemäß beanspruchte Verfahren trägt diesem Umstand Rechnung und gestattet neben der Rückgewinnung dieser als Wertstoff angesehenen Silikon tragenden Materialien auch noch das Upcycling des abgelösten Silikons zu einem Brönstedtsauren, endäquilibrierten Acetoxysiloxan, das als Reaktivsiloxan zum Beispiel für die Herstellung von Polyethersiloxanen bestens eingesetzt werden kann.

Der Begriff des "Upcyclings" kennzeichnet somit im Sinne dieser Erfindung die Transformation von Silikonabfällen in höherwertige Produkte, es kommt also zu einer stofflichen Aufwertung; in Anlehnung an die Definition in I. Vollmer et al., Angew. Chem. Int. Ed. 2020, 59, 15402- 15423 kennzeichnet der Begriff des "Upcyclings" somit im Sinne dieser Erfindung vorzugsweise die Transformation des Silikonabfalls in Chemikalien, die einen höheren Marktwert als Monomere oder Pyrolyseöl haben.

Da der erfindungsgemäße Aufschluss unter moderaten Reaktionsbedingungen erfolgt, erleiden zum Beispiel derartig mit-recycliertes HDPE/ LDPE keinerlei Qualitätseinbuße.

Erfindungsgemäß wird die Wärmebehandlung der Silikonabfälle, wie z.B. Silikonöle respektive der Silikonkautschuke, vorzugsweise bei Temperaturen zwischen 50°C und 200°C, bevorzugt zwischen 80°C und 160°C, besonders bevorzugt zwischen 120°C und 150°C vorgenommen.

Der erfindungsgemäße Aufschluss kann vorteilhafterweise bei Normaldruck (1013 hPa), Unter- oder aber auch zur Realisierung hoher Wärmebehandlungstemperaturen bis 200°C in druckfesten Apparaturen unter Überdruck vorgenommen werden. Bevorzugt wird der erfindungsgemäße Aufschluss bei Normaldruck durchgeführt.

Erfindungsgemäß bevorzugt wird die verwendete Brönstedtsäure mit einem pKa-Wert < 4 gemäß einer bevorzugten Ausführungsform der Erfindung in Mengen vorteilhafterweise von 0,1 bis 1,5 Massenprozent, bevorzugt in Mengen von 0,15 bis 1,0 Massenprozent, besonders bevorzugt in Mengen von 0,2 bis 0,8 Massenprozent bezogen auf den gesamten Silikon-Anteil des Reaktionssystems eingesetzt.

Mit Reaktionssystem ist das gesamte Stoffgemisch gemeint, dass dem thermischen Aufschluss unterworfen wird, also mindestens umfassend die zu verwertenden End-of-Life-Silikone Essigsäureanhydrid, Essigsäure sowie zumindest eine weitere Brönstedtsäure mit einem pKa-Wert < 4.

Zur Erleichterung der Durchmischung, insbesondere bei erfindungsgemäßem Aufschluss stückiger End-of-Life-Silikone, kann es zweckmäßig sein, dem Reaktionssystem optional Lösungsmittel hinzuzufügen. Als Lösemittel eignen sich erfindungsgemäß zunächst solche, die selbst chemisch inert die Durchmischung und Kontaktierung der Bestandteile des Aufschlusssystems fördern, wie zum Beispiel Alkane und/ oder Alkylaromaten wie Toluol, Xylole, etc. Nachteilig beim Einsatz solcher chemisch inerten Lösemittel ist die Notwendigkeit, diese im Regelfall - spätestens aus dem endäquilibrierten Acetoxysiloxan - wieder entfernen zu müssen.

Darüber hinaus und erfindungsgemäß besonders bevorzugt, können optional auch chemisch reaktive, insbesondere Silizium-enthaltende Lösungsmittel in Form flüssiger Silikone und hierbei insbesondere solcher Silikone, die überwiegend aus D-Einheiten aufgebaut sind, wie zum Beispiel Siloxanzyklen wie Decamethylcyclopentasiloxan und/ oder auch Silikonöle eingesetzt werden. Da die eingesetzte Menge des optionalen chemisch reaktiven, Silizium-enthaltenden Lösemittels Eingang in den Silikon-Anteil der Gesamtmasse des Reaktionssystems nimmt, wäre diese bei der jeweiligen Ansatzberechnung mit zu Betrachten. Erfindungsgemäß vorteilhaft ist der optionale Einsatz solcher reaktiven Silizium-enthaltenden Lösemittel unter dem Aspekt, dass diese Lösemittel in das endäquilibrierte Acetoxysiloxan chemisch eingebaut werden und sich somit die Notwendigkeit deren späterer Abtrennung erübrigt.

Mit Blick auf die erfindungsgemäß einzusetzende Brönstedtsäure mit einem pKa-Wert < 4 entspricht es einer besonders bevorzugten Ausführungsform der Erfindung, wenn in dem Upcycling-Verfahren als Brönstedtsäuren Protonensäuren mit einem pKa-Wert kleiner - 1,30, wie vorzugsweise Salpetersäure, Methansulfonsäure und/oder p-Toluolsulfonsäure, vorzugsweise Protonensäuren mit einem pKa-Wert kleiner - 2,90 wie vorzugsweise konzentrierte Schwefelsäure, besonders bevorzugt Protonensäuren mit einem pKa-Wert kleiner - 4,90 wie vorzugsweise die Perfluoralkansulfonsäuren wie Heptafluorpropansulfonsäure, Pentafluorethansulfonsäure, Trifluormethansulfonsäure, dann Perchlorsäure und/oder Chlorsulfonsäure verwendet werden, wobei insbesondere Perfluoralkansulfonsäuren präferiert werden, und hierbei Trifluormethansulfonsäure ganz besonders bevorzugt ist, sowie vorzugsweise sulfonsaure oder perfluoralkylsulfonsaure Ionenaustauscherharze.

Erfindungsgemäß bevorzugt wird den Reaktionssystemen gemäß einer bevorzugten Ausführungsform der Erfindung Essigsäure in Mengen von vorteilhafterweise 0,5 bis 6,0 Massenprozent, bevorzugt von 1,5 bis 3,5 Massenprozent bezogen auf den gesamten Silikon-Anteil des Reaktionssystems zugesetzt.

Erfindungsgemäß bevorzugt wird Essigsäureanhydrid gemäß einer bevorzugten Ausführungsform der Erfindung in Mengen von 0,13 bis 33 Massenprozent, bevorzugt in Mengen von 0,69 bis 6,9 Massenprozent bezogen auf den gesamten Silikon-Anteil des Reaktionssystems eingesetzt.

Mit Silikon-Anteil ist im Sinne dieser Erfindung die Gesamtmasse an Silikon in dem Reaktionssystem gemeint.

Für den Fachmann einsichtig, empfiehlt sich vor der Verarbeitung von unbekannten Silikonabfällen deren repräsentative Beprobung mit anschließendem Testaufschluß im Labor- und/ oder Technikumsmaßstab, um so zu ermitteln, wie hoch der aktuelle Silikongehalt ist und auch mit welchem Zwangsanfall silikonfreier Anteile zu rechnen ist. Hier sind unter anderem Bindemittel, Kunststoffe und zum Beispiel im Falle des Elektronikschrotts Metalle, Keramik, etc. zu nennen.

Gemäß der Erfindung erfolgt die Umsetzung in einem Reaktor, dessen Volumen mindestens 1 Liter beträgt, vorzugsweise aber mindestens 5 Liter, insbesondere mindestens 10 Liter beträgt, und vorzugsweise maximal 500000 Liter beträgt.

Der Begriff des Reaktors ist dem Fachmann an sich wohlbekannt und bedarf daher keiner gesonderten Erläuterung. Als Reaktor wird gewöhnlich und so auch vorzugsweise im Sinne dieser Erfindung ein abgegrenzter Raum, beispielsweise ein gerührter Behälter (z.B. ein Rührkessel) oder ein Rohr (z.B. Strömungsrohr als Durchflussreaktor) bezeichnet, in dem chemische Stoffumwandlungen gezielt durchgeführt werden können. Es können dies, wie der Fachmann weiß, offene oder geschlossene Behälter sein, in denen die Edukte in die gewünschten Produkte oder Zwischenprodukte umgewandelt werden. Das Volumen von Reaktoren wird vom Hersteller angegeben oder kann durch Auslitern bestimmt werden. Das Reaktormaterial kann vorzugsweise aus den dazu geeigneten Materialien, wie vorteilhafterweise Glas oder Keramik, bevorzugt aus Metall, insbesondere hochlegierten Edelstählen, besonders bevorzugt aus Hastelloy, ausgewählt werden. All dies ist dem Fachmann bekannt. Vorzugsweise verfügen geeignete Reaktoren über Vorrichtungen, die ein Vermischen der Reaktionsmasse ermöglichen. Geeignete Rührtechnik oder Rührwerke sind dem Fachmann bekannt und umfassen z.B. Propellerrührer, Ankerrührer, Balkenrührer, Schrägblattrührer, Dissolver, Becherrührer, Leitstrahlmischer oder Magnetrührwerk. Zur Heizung oder Kühlung der Reaktionsmasse oder zur Steuerung der Prozesswärme im Innenraum des Reaktors kann auf bekannte Mittel, wie z.B. Doppelmantel, Halbrohrschlangen oder Vollrohrschlangen zurückgegriffen werden. Mit Blick auf die Betriebsarten kann im Wesentlichen zwischen einer kontinuierlichen und einer diskontinuierlichen Betriebsweise unterschieden werden. Vorzugsweise werden in Anlagen für große Produktionsmengen kontinuierliche Prozesse eingesetzt, während bei kleineren Produktmengen vorzugsweise chargenweise gearbeitet wird. All dies weiß der Fachmann. Reaktoren, wie insbesondere Rührkessel, sind in vielfältiger Weise kommerziell erhältlich, beispielsweise bei der Behälter KG Bremen GmbH & Co, Theodor-Barth-Str. 25, 28307 Bremen, Deutschland, oder beispielsweise bei der Büchi AG, Gschwaderstrasse 12, 8610 Uster / Schweiz. Außerdem sei ergänzend noch auf das Buch "Chemiereaktoren: Grundlagen, Auslegung und Simulation (Deutsch), 19. April 2017, von Jens Hagen" verwiesen; ferner auf das Buch "Handbuch Chemische Reaktoren, Grundlagen und Anwendungen der Chemischen Reaktionstechnik, Herausgegeben von Reschetilowski, Wladimir, Verlag: Springer, Berlin; 1. Aufl. 2020"; ferner auf das Buch von Klaus Hertwig, Lothar Martens: Chemische Verfahrenstechnik: Berechnung, Auslegung und Betrieb chemischer Reaktoren, Oldenbourg, München 2007.

Offenbart wird außerdem die Verwendung von sauren, endäquilibrierten Acetoxygruppen tragenden Siloxanen mit Kettenlängen größer 3 Siliziumatomen, hergestellt unter Einsatz eines Upcycling-Verfahren aus End-of-Life-Silikonen, insbesondere wie hier erfindungsgemäß dargelegt, zur Herstellung von Polyethersiloxanen, insbesondere für die Herstellung von Polyurethanschaumstabilisatoren, Entschäumern, Lack-, Verlaufs- und Dispergieradditiven und/oder Dismulgatoren. Entsprechende Polyethersiloxane sind erhältlich durch Umsetzung der Acetoxysiloxane mit Polyetherolen.

Offenbart wird außerdem die Verwendung von sauren, endäquilibrierten Acetoxygruppen tragenden Siloxanen mit Kettenlängen größer 3 Siliziumatomen, hergestellt unter Einsatz eines Upcycling-Verfahrens aus End-of-Life-Silikonen, insbesondere wie zuvor beschrieben oder in einem der Ansprüche 1 bis 11 dargelegt, zur Herstellung von Kleb- und/oder Dichstoffmassen auf Silikonbasis.

Kleb- und/oder Dichstoffmassen auf Silikonbasis sind allgemein bekannt und finden breite Verwendung. Silikondichtungsmassen repräsentieren auf dem Markt den weitaus größten Teil der elastischen Dichtungsmassen. Die Herstellung von elastischen Silikondichtungsmassen basiert gewöhnlich auf einem reaktiven Polysiloxan, üblicherweise einem reaktiven Polydimethylsiloxan. Das Polymer ist reaktiv, da es an beiden Enden der Siloxankette typischerweise eine Hydroxylfunktion besitzt (PDM-Siloxan). Bei der traditionellen Herstellung von Silikondichtungsmassen lässt man gewöhnlich in einem ersten Schritt die reaktiven Endgruppen des Polysiloxans mit einem Vernetzungsmittel oder Vernetzer unter Bildung des sogenannten "Präpolymers" reagieren, das dann bei seiner Verwendung durch weitere Vernetzung ausgehärtet wird.

Üblicherweise kann dabei ein Alkyltriacetoxysilan als Vernetzungsmittel verwendet werden, bevorzugt Ethyltriacetoxysilan, dessen eine der drei Acetatfunktionen mit der terminalen Hydroxylgruppe des PDM-Siloxans kondensierend unter Freisetzung eines Essigsäuremoleküls und Bildung einer Siloxanylbindung reagiert. Auf diese Weise erhält das Polydimethylsiloxan an beiden Termini der Siloxankette zwei Acetoxyfunktionen, das bedeutet an jedem Kettenende zwei reaktive Endgruppen. Es sind diese reaktiven Gruppen, die für die Reaktion mit Feuchtigkeit aus der Umgebung nach dem Aufbringen der Silikonpaste vorgesehen sind, um sowohl via Kondensation eine neue Siloxanbindung zwischen zwei Polymerketten aufzubauen, als auch noch über die zwei verbliebenen reaktiven Endgruppen durch die Reaktion mit Wasser oder Feuchtigkeit aus der Umgebung eine dreidimensionale, über T-Einheiten vernetzte Endstruktur auszubilden. Neben dieser auf Alkyltriacetoxysilan basierenden Technik sind auch Alkoxy- und Oximtechnologien bekannt. Darüber hinaus finden sich im Stand der Technik Benzamid-, Lactat- und / oder Enoxy-Technologien, wenn auch in viel geringerem Maße.

Nun wurde im Rahmen der hier vorliegenden Erfindung überraschenderweise festgestellt, dass man Acetoxysiloxan, und zwar insbesondere das erfindungsgemäß unter Einsatz des hier beschriebenen Upcycling-Verfahrens aus End-of-Life-Silikonen hergestellte Acetoxysiloxan besonders vorteilhaft zur Herstellung von Kleb- und/oder Dichstoffmassen auf Silikonbasis einsetzen kann, und zwar vorzugsweise dadurch, dass man abweichend von dem oben beschriebenen, üblichen Vorgehen bei der Vorpolymerisation Anteile des PDM-Siloxans durch Anteile von Acetoxysiloxan, besonders bevorzugt durch Anteile des erfindungsgemäß hergestellten Acetoxysiloxans ersetzt und so zu Kleb- und/oder Dichstoffmassen gelangt, die sich durch eine vorzügliche Härtungskinetik und vorteilhafterweise sogar durch ein, verglichen mit Standardsystemen verbessertes Elastizitätsmodul auszeichnen.

Ohne an eine Theorie gebunden zu sein, wird im Rahmen dieser Erfindung angenommen, dass eine entsprechende Beimischung des Acetoxysiloxans zu einer Formulierung führt, bei der durch die lineare Verknüpfung von Acetoxysiloxaneinheiten mit hydroxyfunktionellem Siloxan zunächst längere Siloxanketten erzeugt werden, die erst dann mit dem vernetzenden Silan (zum Beispiel Ethyltriacetoxysilan) zum aushärtbaren Polymer ("Präpolymer") reagieren. Mit anderen Worten bringt man im Sinne dieser Erfindung die hohe Acetoxyreaktivität vorteilhafterweise bereits in die Phase des Prä-Polymeraufbaus ein und gelangt dadurch sogar zu E-Modul-verbessernden, längeren Siloxanketten, die durch die übliche Reaktion hydroxyfunktionellen Siloxans (PDM- Siloxan) mit der Acetoxysilan-Komponente nie zustande kämen, da die hohe Kondensationsneigung der Acetoxysilankomponente sonst unter zügiger Bildung von Raumnetzstrukturen die Generierung längerer Siloxanketten verhindert.

Eine im Sinne dieser Erfindung besonders bevorzugte, recyclierte Acetoxysiloxane enthaltende Präpolymermasse kann man z.B. direkt als polymerisationsaktive Masse oder aber vorzugsweise auch unter Zusatz weiterer Formulierungskomponenten als Kleb - und/oder Dichtstoffsystem einsetzen.

Vorzugsweise können während der Herstellung der Silikondicht- und/oder Klebstoffmasse üblicherweise aus einer Reihe von Gründen als Formulierungskomponenten zusätzliche Additive wie Weichmacher, Streckmittel, Füllstoffe, Pigmente, Farbstoffe und/oder Haftvermittler eingearbeitet werden. Um die Vernetzung in der Endanwendung zu beschleunigen, kann vorzugsweise auch ein Katalysator zugesetzt werden.

Mit dem Ziel verknüpft, aus dem aushärtbaren Polymer eine Paste zu erhalten, die zum leichten Aufbringen als Endprodukt geeignet ist, kann gemäß einer bevorzugten Ausführungsform der Erfindung mindestens ein Verdickungsmittel, vorzugsweise Siliciumdioxid (SiO₂) zugesetzt werden, wodurch aus einem zunächst im Wesentlichen flüssigen Reaktionsprodukt eine Paste, insbesondere eine steife Paste mit viskoelastischer Rheologie, entsteht.

Die resultierende Paste wird dann vorzugsweise in einen geeigneten Ausbringbehälter gefüllt, üblicherweise in eine Kunststoffpatrone, aus der das Silikondichtmittel unter Anwendung leichten Drucks durch eine Düse auf den Anbringungsort aufgebracht werden kann.

In einer bevorzugten Ausführungsform der Erfindung wird das Acetoxysiloxan, besonders bevorzugt das recyclierte Acetoxysiloxan unterstöchiometrisch bezogen auf das PDM-Siloxan eingesetzt, das heißt, die Molmenge Si-gebundener Acetoxygruppen (=SiOAc) ist kleiner als die Molmenge der an Si-gebundenen Hydroxygruppen (=SiOH).

Das Polymermolekül bleibt dank der OH-Endgruppe reaktiv, so dass das Vernetzungsmittel hiermit reagieren kann. Das Vernetzungsmittel dient dazu, nach der Reaktion mit der Endgruppe am reaktiven Polymer mehr als eine reaktive und verfügbare Endgruppe bereitzustellen.

Die Viskosität der PDM-Siloxane wird in Pascalsekunden (Pa.s) ausgedrückt. Es ist daher üblich, die reaktiven Polymerprodukte teilweise durch ihre Viskosität zu charakterisieren. Üblicherweise verwendete reaktive Polydimethylsiloxane haben eine Viskosität bei 20 °C im Bereich von 20 bis 350 Pa·s, z.B. diejenigen, die als Typ 20 (20 Pa.s), 50 (50 Pa.s), 80 (80 Pa.s), 120 (120 Pa.s), 150 (150 Pa.s) und 350 (350 Pa.s) bezeichnet werden. Geeignete reaktive Polymere sind z.B. unter dem Namen Polymer FD von der Firma Wacker, Xiameter^{®} OHX von Dow Corning oder Silopren^{®} E von Momentive Performance Materials oder Bluesil^{®} FLD von Bluestar oder auch unter dem Namen Polymer OH Serie von Evonik erhältlich.

Gemäß einer weiteren bevorzugten Ausführungsform der Erfindung ist in den Silikondicht- und/oder Klebstoffmassen als Vernetzungsmittel besonders bevorzugt Triacetoxysilan, insbesondere Ethyltriacetoxysilan einsetzbar. Diese sogenannten "Essigsäure enthaltenden" Vernetzungsmittel führen bekanntermaßen zu eher "zähelastischen" Produkten, die ebenfalls durch eine gewisse Säure gekennzeichnet sind. Sie eignen sich für die meisten Endanwendungen ohne Probleme, insbesondere für Verglasungen, Sanitäranwendungen, elastische Verklebungen in der Glas- und Metallindustrie oder für Dichtungen in Kraftfahrzeugen, Booten oder Wohnwagen. Sie eignen sich weniger für alkalische Substrate wie Beton oder zementierte Substrate oder für bestimmte Metalle wie Kupfer. Im Rahmen der Erfindung wird Ethyltriacetoxysilan bevorzugt. Die Methyl-, Propyl- und Vinylvarianten des Triacetoxysilans sind jedoch ebenfalls bekannt und geeignet. Die Ethylvariante bietet den Vorteil, dass sie unter Standardbedingungen flüssig ist, so dass sie leicht verarbeitet und in die Zusammensetzung eingearbeitet werden kann. Auch Gemische der Methyl- und Ethylvariante sind weit verbreitet, da die meisten Versionen davon flüssig sind. Als "Essigsäure enthaltende" Vernetzer werden häufig Methyltriacetoxysilan, Ethyltriacetoxysilan, Propyltriacetoxysilan und/oder Gemische davon verwendet.

Geeignete Produkte sind beispielsweise die Vernetzer ES21, ES23, ES24, erhältlich von der Firma Wacker, die Vernetzer 3034, 3187 von der Firma Momentive Performance Materials, die Vernetzer MTA, ETA, PTA, ETA / MTA (70/30), PTA / MTA (70/30) von der Firma Nitro Chemistry und die Vernetzer AC 10, 15, 30 von der Firma Evonik.

Für die Versiegelung von Polyvinylchlorid (PVC) -Kunststoffen, alkalischen Substraten und porösen Substraten können im Rahmen einer bevorzugten Ausführungsform der Erfindung Silikondichtmassen mit einer hinsichtlich Säure- und Säureerzeugung eher neutralen Zusammensetzung bevorzugt werden und bedienen sich damit vorzugsweise anderer Vernetzungsmittel als Triacetoxysilanen.

Es können demgemäß nach dieser bevorzugten Ausführungsform der Erfindung neutrale Silikondichtungsmittel hergestellt werden, vorzugsweise unter Verwendung eines oder mehrerer Silane auf Alkoxybasis, wie Alkyltrialkoxysilan, vorzugsweise Methyltrimethoxysilan oder Vinyltrimethoxysilan, oder mit einem oder mehreren Oximresten als Substituenten auf dem Silicium des Vernetzungsmittels. Benzamido- oder Lactato-Reste sind ebenfalls geeignet. Unter den Vernetzungsmitteln auf Oximbasis ist Methylethylketoxim, oft als "MEKO" abgekürzt, CH₃-CH₂-(CH₃) C = N-OH, ein bekannter Substituent. Andere bekannte Substituenten am Siliziumatom des Silanvernetzungsmittels sind Acetonoxim, Methylisobutylketonoxim und/oder Methylpropylketonoxim.

Geeignete Alkyl-, Alkenyl- oder Phenyl-Trialkoxy-Vernetzer sind beispielsweise Methyltrimethoxysilan, Ethyltrimethoxysilan, Propyltrimethoxysilan, Vinyltrimethoxysilan, Isobutyltrimethoxysilan, Phenyltrimethoxysilan, Methyltriethoxysilan, Propyltriethoxysilan, Methyltriethoxysilan, Propyltriethoxysilan, Methyltriethoxysilan, Propyltriethoxysilan, Methyltriethoxysilan, Propyltriethoxysilan Vinyltriethoxysilan, Phenyltriethoxysilan, Octyltrimethoxysilan, Octyltriethoxysilan und/oder Gemische davon.

Geeignete Produkte sind z.B. Silquest^{®} A-1630, Silquest^{®} A-171, erhältlich von der Firma Momentive Performance Materials, Geniosil^{®} XL-10, Vernetzer ME60, ME63, Geniosil GF56 von der Firma Wacker, Vernetzer MTMS (Dynasylan^{®}) VTMO (Evonik), Vinyltrimethoxysilan, Vinyltriethoxysilan der Firma Nitrochemie.

In einer weiteren bevorzugten Ausführungsform der Erfindung wird das Acetoxysiloxan, besonders bevorzugt das recyclierte Acetoxysiloxan bevorzugt überstöchiometrisch bezogen auf das PDM-Siloxan eingesetzt, das heißt, die Molmenge Si-gebundener Acetoxygruppen (=SiOAc) ist größer als die Molmenge der an Si-gebundenen Hydroxygruppen (=SiOH).

Das Polymermolekül ist dann durch die Acetoxy-Endgruppe reaktiv, so dass das Vernetzungsmittel hiermit reagieren kann. Das Vernetzungsmittel dient dazu, nach der Reaktion mit der Endgruppe am reaktiven Polymer mehr als eine reaktive und verfügbare Endgruppe bereitzustellen.

Gemäß dieser bevorzugten Ausführungsform der Erfindung können in den Silikondichtmassen besonders bevorzugt Triacetoxysilan, insbesondere Ethyltriacetoxysilan als Vernetzungsmittel verwendet werden. Diese sogenannten "Essigsäure enthaltenden" Vernetzungsmittel führen bekanntermaßen zu eher "zähelastischen" Produkten, die ebenfalls durch eine gewisse Säure gekennzeichnet sind. Sie eignen sich für die meisten Endanwendungen ohne Probleme, insbesondere für Verglasungen, Sanitäranwendungen, elastische Verklebungen in der Glas- und Metallindustrie oder für Dichtungen in Kraftfahrzeugen, Booten oder Wohnwagen. Sie eignen sich weniger für alkalische Substrate wie Beton oder zementierte Substrate oder für bestimmte Metalle wie Kupfer. Ethyltriacetoxysilan wird bevorzugt. Die Methyl-, Propyl- und Vinylvarianten des Triacetoxysilans sind jedoch ebenfalls bekannt und geeignet. Die Ethylvariante bietet den Vorteil, dass sie unter Standardbedingungen flüssig ist, so dass sie leicht verarbeitet und in die Zusammensetzung eingearbeitet werden kann. Auch Gemische der Methyl- und Ethylvariante sind weit verbreitet, da die meisten Versionen davon flüssig sind. Als "Essigsäure enthaltende" Vernetzer werden häufig Methyltriacetoxysilan, Ethyltriacetoxysilan, Propyltriacetoxysilan und/oder Gemische davon verwendet.

Geeignete Produkte sind beispielsweise die Vernetzer ES21, ES23, ES24, erhältlich von der Firma Wacker, die Vernetzer 3034, 3187 von der Firma Momentive Performance Materials, die Vernetzer MTA, ETA, PTA, ETA / MTA (70/30), PTA / MTA (70/30) von der Firma Nitro Chemistry und die Vernetzer AC 10, 15, 30 von der Firma Evonik.

In Anbetracht der Tatsache, dass gemäß dieser bevorzugten Ausführungsform der Erfindung das Präpolymer intrinsisch sauer reagiert, wird die Vernetzung bevorzugt noch mit Trialkoxysilanvernetzern durchgeführt.

Geeignete Alkyl-, Alkenyl- oder Phenyl-Trialkoxy-Vernetzer sind beispielsweise Methyltrimethoxysilan, Ethyltrimethoxysilan, Propyltrimethoxysilan, Vinyltrimethoxysilan, Isobutyltrimethoxysilan, Phenyltrimethoxysilan, Methyltriethoxysilan, Propyltriethoxysilan, Methyltriethoxysilan, Propyltriethoxysilan, Methyltriethoxysilan, Propyltriethoxysilan, Methyltriethoxysilan, Propyltriethoxysilan Vinyltriethoxysilan, Phenyltriethoxysilan, Octyltrimethoxysilan, Octyltriethoxysilan und/oder Gemische davon.

Geeignete Produkte sind z.B. Silquest A-1630, Silquest A-171, erhältlich von der Firma Momentive Performance Materials, Geniosil^{®} XL-10, Vernetzer ME60, ME63, Geniosil GF56 von der Firma Wacker, Vernetzer MTMS (Dynasylan^{®}) VTMO (Evonik), Vinyltrimethoxysilan, Vinyltriethoxysilan der Firma Nitrochemie.

Es entspricht einer bevorzugten Ausführungsform der Erfindung, wenn das saure, endäquilibrierte Acetoxygruppen tragende Siloxan von der aus dem Upcycling-Verfahren stammenden und noch darin befindlichen Brönstedtsäure befreit wird, bevor es zur Herstellung von Kleb- und/oder Dichtstoffmassen auf Silikonbasis eingesetzt wird.

Dadurch gewährleistet man eine bessere Lagerstabilität der kondensationsvernetzenden Polymermasse und gewinnt zudem Formulierfreiheit sowohl im Hinblick auf die Mengenbemessung als auch auf die Auswahl eines vorzugsweise noch hinzuzugebenden Katalysators. Die Abtrennung der Brönstedtsäure kann auf übliche Weise, vorzugsweise durch Neutralisation mit einer Base und nachfolgender Abtrennung des gebildeten Salzes vom Acetoxysiloxan erfolgen. Zu den Ausgestaltungsmöglichkeiten der Abtrennung insbesondere der Brönstedtsäure sei außerdem auch auf die Lehre der europäischen Patentanmeldung EP 3744753 A1 verwiesen, die ein Verfahren zur Aufreinigung von Acetoxysiloxanen offenbart und insofern, entsprechend einer weiteren bevorzugten Ausführungsform der Erfindung, vollumfänglich Teil der hier vertretenen Lehre sein soll.

Die vorgenannten Ausführungen machen klar, dass die erfindungsgemäß erhältlichen sauren, endäquilibrierten Acetoxygruppen tragenden Siloxane mit Kettenlängen größer 3 Siliziumatomen, hergestellt unter Einsatz eines Upcycling-Verfahren aus End-of-Life-Silikonen, wie zuvor beschrieben, sehr gut und mit Vorteil zur Herstellung von Kleb- und/oder Dichtstoffmassen auf Silikonbasis eingesetzt werden können.

### Beispiele

Die folgenden Beispiele dienen dem Fachmann allein zur Erläuterung dieser Erfindung und stellen keinerlei Beschränkung des beanspruchten Verfahrens dar. Die erfindungsgemäße Bestimmung der Wassergehalte erfolgt grundsätzlich mit der Karl-Fischer-Methode in Anlehnung an DIN 51777, DGF E-III 10 und DGF C-III 13a. Die ²⁹Si-NMR-Spektroskopie diente in allen Beispielen der Reaktionsverfolgung.

Die ²⁹Si-NMR-Proben werden im Rahmen dieser Erfindung bei einer Messfrequenz von 79,49 MHz in einem Bruker Avance III Spektrometer, das mit einem Probenkopf 287430 mit 10 mm Spaltbreite ausgestattet ist, bei 22°C gelöst in CDCl₃ und gegen Tetramethylsilan (TMS) als externem Standard [δ(²⁹Si) = 0,0 ppm] gemessen.

Die Gaschromatogramme werden an einem GC-Gerät des Typs GC 7890B der Fa. Agilent Technologies ausgestattet mit einer Säule vom Typ HP-1; 30m x 0,32mm ID x 0,25µm dF (Agilent Technologies Nr. 19091Z-413E) und Wasserstoff als Trägergas mit folgenden Parametern aufgenommen:
Detektor: FID; 310°C
Injektor: Split; 290°C
Mode: constant flow 2 mL/min
Temperaturprogramm: 60°C mit 8°C/min -150°C mit 40°C/min - 300°C 10 min.

Als Indikator für das Erreichen des Äquilibriergleichgewichtes wird der gaschromatographisch bestimmte Gesamtcylengehalt definiert als die Summe der D₄-, D₅-, D₆-Gehalte bezogen auf die Siloxanmatrix und festgestellt nach der Derivatisierung der aus dem erfindungsgemäßen Aufschluß gewonnenen α,ω-Diacetoxypolydimethylsiloxane zu den entsprechenden α,ω-Diisopropoxy-polydimethylsiloxanen herangezogen. Die Derivatisierung zu den α,ω-Diisopropoxy-polydimethyl-siloxanen wird hierbei bewusst gewählt, um eine unter den Bedingungen der gaschromatographischen Analyse gegebenenfalls erfolgende, thermisch induzierte Rückspaltungsreaktion der α,ω-Diacetoxy-polydimethylsiloxane zu verhindern (zur Rückspaltungsreaktion siehe u.a. J. Pola et al., Collect. Czech. Chem. Commun. 1974, 39(5), 1169-1176 und auch W. Simmler, Houben-Weyl, Methods of Organic Chemistry, Vol. VI/2, 4th Edition, O-Metal Derivates of Organic Hydroxy Compounds S. 162 ff)).

Die eingesetzten Polyetherdiole besitzen Wassergehalte von ca. 0,2 Massen-% und werden nach deren Vortrocknung verwendet. Eingesetztes Toluol respektive Alkylbenzol (C10-C13) besitzen einen Wassergehalt von 0,03 Massen-% und werden ohne Vortrocknung verwendet.

Die OH-Zahl der Polyetherdiole wird gemäß DGF C-V 17 a (53), beziehungsweise gemäß Ph. Eur. 2.5.3 Method A bestimmt, wobei man zunächst die Hydroxylgruppen der zu analysierenden Probe mit Essigsäureanhydrid in Gegenwart von Pyridin acetyliert und dann im Rahmen einer Differenztitration (Blindprobe, Berücksichtigung des Acetanhydridüberschusses) die freigesetzte Essigsäure als Verbrauch KOH in mg pro Gramm Polyetherdiol titriert.

### Beispiel 1 (erfindungsgemäß)

### Herstellung eines endäquilibrierten, Acetoxy-terminierten, linearen Polydimethylsiloxans

In einem 1000-ml-Vierhalskolben mit KPG-Rührer, Innenthermometer und aufgesetztem Rückflusskühler werden 120,0 g einer in Stückchen von ca. 4 bis 6 mm Kantenlänge geschnittenen, transparenten, durchgehärteten Silikonmasse (Care Sanitär Profisilikon, Firma Conel GmbH) zusammen mit 50,0 g (0,489 mol) Essigsäureanhydrid und 280,0 g (0,752 mol) Dekamethylcyclopentasiloxan (D₅) sowie 13,6 g Essigsäure (3,0 Gewichtsprozent bezogen auf die Gesamtmasse der Reaktanden) unter Rühren vorgelegt und mit 0,92 g (0,54 ml) Trifluormethansulfonsäure (0,2 Massenprozent bezogen auf den Gesamtansatz) versetzt und zügig auf 80°C erhitzt. Die zu Beginn von erkennbar gröberen Feststoffanteilen durchsetzte Reaktionsmischung wird unter weiterem Rühren für 6 Stunden bei dieser Temperatur gehalten.

Nach Erkalten des Ansatzes trennt sich eine farblos-klare, leichtbewegliche Flüssigkeit als Überstand von abgesetztem weißen Füllstoff ab, den man durch Filtration über eine Filterpresse abtrennt. Das klare farblose Filtrat zeigt im ²⁹Si-NMR-Spektrum die Präsenz von Si-Acetoxygruppen in einer Ausbeute von ca. 94% bezogen auf eingesetztes Essigsäureanhydrid entsprechend einem α,ω-Diacetoxypolydimethylsiloxan mit einer mittleren Gesamtkettenlänge von ca. 14.

### Überführung des α,ω-Diacetoxypolydimethylsiloxans in das entsprechende α,ω-Diisopropoxy-polydimethylsiloxan zur analytischen Charakterisierung

Unmittelbar nach der Synthese werden 50,0 g dieses trifluormethansulfonsauren, äquilibrierten α,ω-Diacetoxypolydimethylsiloxans in einem 250-ml-Vierhalsrundkolben ausgerüstet mit KPG-Rührer, Innenthermometer und aufgesetztem Rückflusskühler zusammen mit 11,3 g eines über Molekularsieb getrockneten Isopropanols unter Rühren bei 22°C vermischt. Die Reaktionsmischung wird dann durch Einleiten gasförmigen Ammoniaks (NH₃) bis zur alkalischen Reaktion (feuchtes Universalindikatorpapier) beaufschlagt und dann noch 45 Minuten bei dieser Temperatur nachgerührt. Die ausgefallenen Salze werden mit Hilfe eines Faltenfilters abgetrennt.

Isoliert wird eine farblos-klare Flüssigkeit deren begleitendes ²⁹Si-NMR-Spektrum die quantitative Umwandlung des α,ω-Diacetoxypolydimethylsiloxans in ein α,ω-Diisopropoxypolydimethylsiloxan belegt.

Ein Aliquot dieses α,ω-Diisopropoxypolydimethylsiloxans wird entnommen und gaschromatographisch analysiert. Das Gaschromatogramm weist folgende Gehalte (Angaben in Massenprozent) auf:

| D₄ | D₅ | D₆ | Summe (D₄ - D₆) | Isopropanolgehalt |
|---|---|---|---|---|
| 2,90 % | 2,20 % | 0,70 % | 5,80 % | 1,50 % |

Unter Berücksichtigung des Isopropanolüberschusses sind hierbei die Gehalte an Siloxancyclen (D₄, D₅ und D₆) allein bezogen auf den Siloxananteil berechnet.

### Beispiel 2 (erfindungsgemäß)

Umsetzung des in Beispiel 1 gewonnenen α,ω-Diacetoxypolydimethylsiloxans zu einem SiOC-verknüpften, linearen Polydimethylsiloxan-Polyoxyalkylen-Blockcopolymer des Strukturtyps ABA in Toluol mit Ammoniak als Hilfsbase

In einem 500-ml-Vierhalskolben mit KPG-Rührer, Innenthermometer und aufgesetztem Rückflusskühler werden 96,0 g eines Butanol-gestarteten Polypropylenoxygruppen enthaltenden Polyetherols der mittleren Molmasse 1935 g/ mol (bestimmt nach OH-Zahl) zusammen mit 126 ml Toluol unter Rühren vorgelegt. Dann werden 30,0 g des im Beispiel 1 hergestellten, α,ω-Diacetoxypolydimethylsiloxans hinzugegeben. Mit Hilfe eines Einleitrohres wird Im Verlauf von 45 Minuten gasförmiger Ammoniak in mäßigem Strom in die weiter gerührte Reaktionsmatrix eingeleitet, bis ein an feuchtem Universalindikatorpapier vollzogener Tüpfeltest deutlich alkalische Reaktion signalisiert.

Im Verlauf weiter 45 Minuten wird ein reduzierter Ammoniakstrom eingeleitet und die Reaktionsmischung auf 50°C erwärmt. Die Gaseinleitung wird beendet und man lässt den Ansatz auf 23°C erkalten bevor man die darin befindlichen Salze mit Hilfe eines Faltenfilters von der Flüssigkeit abtrennt. Das so gewonnene, klare Filtrat wird bei 70°C Badtemperatur und einem angelegten Hilfsvakuum von < 1 mbar am Rotationsverdampfer von Flüchtigen befreit.

Man isoliert ein farblos, klares ABA-strukturiertes Polydimethylsiloxan-Polyoxyalkylen-Blockcopolymer, dessen ²⁹Si-NMR-Spektrum die angestrebte Struktur absichert.

## Patentansprüche

1. Upcycling-Verfahren zur Herstellung von sauren, endäquilibrierten Acetoxygruppen tragenden Siloxanen mit Kettenlängen größer 3 Siliziumatomen aus End-of-Life-Silikonen, insbesondere umfassend Silikon-Kleb- und/oder -Dichtstoffe und/ oder Silikonkautschuk- und/oder Silikonöl-Abfälle, durch thermischen Aufschluss der End-of-Life-Silikone in einem sauren Reaktionsmedium, umfassend Essigsäureanhydrid, Essigsäure sowie zumindest eine weitere Brönstedtsäure mit einem pKa-Wert < 4, wobei der Aufschluss in einem Reaktor erfolgt, dessen Volumen mindestens 1 Liter beträgt.

2. Upcycling-Verfahren gemäß Anspruch 1, **dadurch gekennzeichnet, dass** der Aufschluss ohne Wasserabtrennung durchgeführt wird.

3. Upcycling-Verfahren gemäß Anspruch 1 oder 2, **dadurch gekennzeichnet, dass** der Aufschluss in einem Reaktor erfolgt, dessen Volumen mindestens 5 Liter, insbesondere mindestens 10 Liter beträgt, und vorzugsweise maximal 500000 Liter beträgt.

4. Upcycling-Verfahren gemäß zumindest einem der Ansprüche 1 bis 3, **dadurch gekennzeichnet, dass** der Aufschluss bei Temperaturen zwischen 50°C und 200°C, bevorzugt zwischen 80°C und 160°C, besonders bevorzugt zwischen 120°C und 150°C vorgenommen wird.

5. Upcycling-Verfahren gemäß zumindest einem der Ansprüche 1 bis 4, **dadurch gekennzeichnet, dass** die Brönstedtsäure mit einem pKa-Wert < 4 in Mengen von 0,1 bis 1,5 Massenprozent, bevorzugt in Mengen von 0,15 bis 1,0 Massenprozent, besonders bevorzugt in Mengen von 0,2 bis 0,8 Massenprozent bezogen auf den gesamten Silikon-Anteil des Reaktionssystems eingesetzt wird.

6. Upcycling-Verfahren gemäß zumindest einem der Ansprüche 1 bis 5, **dadurch gekennzeichnet, dass** die Essigsäure in Mengen von 0,5 bis 6,0 Massenprozent, bevorzugt von 1,5 bis 3,5 Massenprozent, bezogen auf den gesamten Silikon-Anteil des Reaktionssystems eingesetzt wird.

7. Upcycling-Verfahren gemäß zumindest einem der Ansprüche 1 bis 6, **dadurch gekennzeichnet, dass** das Essigsäureanhydrid in Mengen von 0,13 bis 33 Massenprozent, bevorzugt in Mengen von 0,69 bis 6,9 Massenprozent bezogen auf den gesamten Silikon-Anteil des Reaktionssystems eingesetzt wird.

8. Upcycling-Verfahren gemäß zumindest einem der Ansprüche 1 bis 7, **dadurch gekennzeichnet, dass** als Brönstedtsäuren Protonensäuren mit einem pKa-Wert kleiner - 1,30, wie vorzugsweise Salpetersäure, Methansulfonsäure und/oder p-Toluolsulfonsäure, vorzugsweise Protonensäuren mit einem pKa-Wert kleiner - 2,90 wie vorzugsweise konzentrierte Schwefelsäure, besonders bevorzugt Protonensäuren mit einem pKa-Wert kleiner - 4,90 wie vorzugsweise die Perfluoralkansulfonsäuren wie Heptafluorpropansulfonsäure, Pentafluorethansulfonsäure, Trifluormethansulfonsäure, dann Perchlorsäure und/oder Chlorsulfonsäure verwendet werden, wobei insbesondere Perfluoralkansulfonsäuren präferiert werden, und hierbei Trifluormethansulfonsäure ganz besonders bevorzugt ist, sowie vorzugsweise sulfonsaure oder perfluoralkylsulfonsaure Ionenaustauscherharze.

9. Upcycling-Verfahren gemäß zumindest einem der Ansprüche 1 bis 8, **dadurch gekennzeichnet, dass** der thermische Aufschluss bei Normaldruck (1013 hPa), Unter- oder Überdruck und besonders bevorzugt bei Normaldruck durchgeführt wird.

10. Upcycling-Verfahren gemäß zumindest einem der Ansprüche 1 bis 9, **dadurch gekennzeichnet, dass** die End-of-Life-Silikone Silikon-Kleb- und/oder Silikon-Dichtstoffe umfassen, vorzugsweise Silikon-Kleb- und/oder Silikon-Dichtstoff-Kartuschen betreffen, insbesondere Silikon-Kleb- und/oder Silikon-Dichtstoff-Reste in und/oder an Polyethylen-Behältnissen, bevorzugt umfassend HDPE und/oder LDPE, betreffen.

11. Upcycling-Verfahren gemäß zumindest einem der Ansprüche 1 bis 10 unter Verwertung Silikon-kontaminierten Polyethylens, insbesondere Silikon-kontaminierter Polyethylen-Abfälle, zur Bereitstellung saurer, endäquilibrierter Acetoxygruppen tragender Siloxane mit Kettenlängen größer 3 Siliziumatomen unter im Wesentlichen sortenreiner Rückgewinnung von Polyethylen.

## Claims

1. Upcycling process for producing acidic, end-equilibrated siloxanes bearing acetoxy groups and having chain lengths of greater than 3 silicon atoms from end-of-life silicones, in particular comprising silicone adhesives and/or silicone sealants and/or silicone rubber wastes and/or silicone oil wastes, by thermal digestion of the end-of-life silicones in an acidic reaction medium comprising acetic anhydride, acetic acid and at least one further Brønsted acid having a pKa of < 4, the digestion taking place in a reactor having a volume of at least 1 litre.

2. Upcycling process according to Claim 1, **characterized in that** the digestion is carried out without removal of water.

3. Upcycling process according to Claim 1 or 2, **characterized in that** the digestion takes place in a reactor having a volume of at least 5 litres, in particular at least 10 litres and preferably not more than 500 000 litres.

4. Upcycling process according to at least one of Claims 1 to 3, **characterized in that** the digestion is executed at temperatures between 50°C and 200°C, preferably between 80°C and 160°C, more preferably between 120°C and 150°C.

5. Upcycling process according to at least one of Claims 1 to 4, **characterized in that** the Brønsted acid having a pKa of < 4 is used in amounts of 0.1 to 1.5 percent by mass, preferably in amounts of 0.15 to 1.0 percent by mass, more preferably in amounts of 0.2 to 0.8 percent by mass, based on the total proportion of silicone in the reaction system.

6. Upcycling process according to at least one of Claims 1 to 5, **characterized in that** the acetic acid is used in amounts of 0.5 to 6.0 percent by mass, preferably of 1.5 to 3.5 percent by mass, based on the total proportion of silicone in the reaction system.

7. Upcycling process according to at least one of Claims 1 to 6, **characterized in that** the acetic anhydride is used in amounts of 0.13 to 33 percent by mass, preferably in amounts of 0.69 to 6.9 percent by mass, based on the total proportion of silicone in the reaction system.

8. Upcycling process according to at least one of Claims 1 to 7, **characterized in that** the Brønsted acids used are protic acids having a pKa of less than -1.30, such as preferably nitric acid, methanesulfonic acid and/or p-toluenesulfonic acid, preferably protic acids having a pKa of less than -2.90, such as preferably concentrated sulfuric acid, more preferably protic acids having a pKa of less than -4.90, such as preferably perfluoroalkanesulfonic acids such as heptafluoropropanesulfonic acid, pentafluoroethanesulfonic acid, trifluoromethanesulfonic acid, then perchloric acid and/or chlorosulfonic acid, particular preference being given to perfluoroalkanesulfonic acids, with trifluoromethanesulfonic acid being most preferred here, also preferred are sulfonic acid or perfluoroalkyl sulfonic acid ion-exchange resins.

9. Upcycling process according to at least one of Claims 1 to 8, **characterized in that** the thermal digestion is carried out at standard pressure (1013 hPa), reduced pressure or elevated pressure, and more preferably at standard pressure.

10. Upcycling process according to at least one of Claims 1 to 9, **characterized in that** the end-of-life silicones comprise silicone adhesives and/or silicone sealants, preferably cartridges of silicone adhesive and/or silicone sealant, in particular remnants of silicone adhesive and/or silicone sealant in and/or on PE containers, preferably comprising HDPE and/or LDPE.

11. Upcycling process according to at least one of Claims 1 to 10 in which silicone-contaminated polyethylene, in particular silicone-contaminated PE waste, is recycled to provide acidic, end-equilibrated siloxanes bearing acetoxy groups and having chain lengths of greater than 3 silicon atoms with the essentially single-product recovery of polyethylene.

## Revendications

1. Procédé de recyclage valorisant pour la production de siloxanes acides, complètement équilibrés, porteurs de groupes acétoxy, présentant des longueurs de chaîne supérieures à 3 atomes de silicium, à partir de silicones en fin de vie, comprenant notamment des déchets de colles silicones et/ou de mastics silicones et/ou de caoutchoucs silicones et/ou d'huiles silicones, par digestion thermique des silicones en fin de vie dans un milieu réactionnel acide comprenant de l'anhydride acétique, de l'acide acétique ainsi qu'au moins un autre acide de Brønsted ayant une valeur de pKa < 4, la digestion étant effectuée dans un réacteur dont le volume est d'au moins 1 litre.

2. Procédé de recyclage valorisant selon la revendication 1, **caractérisé en ce que** la digestion est effectuée sans séparation d'eau.

3. Procédé selon la revendication 1 ou 2, **caractérisé en ce que** la digestion s'effectue dans un réacteur dont le volume est d'au moins 5 litres, en particulier d'au moins 10 litres, et de préférence d'au maximum 500.000 litres.

4. Procédé de recyclage valorisant selon au moins l'une des revendications 1 à 3, **caractérisé en ce que** la digestion s'effectue à des températures comprises entre 50 °C et 200 °C, de préférence entre 80 °C et 160 °C, et de façon particulièrement préférée entre 120 °C et 150 °C.

5. Procédé selon au moins l'une des revendications 1 à 4, **caractérisé en ce que** l'acide de Brønsted avec une valeur de pKa < 4 est utilisé en des quantités de 0,1 à 1,5 % en poids, de préférence en des quantités de 0,15 à 1,0 % en poids, et de façon particulièrement préférée en des quantités de 0,2 à 0,8 % en poids, par rapport à la proportion totale de silicone du système réactionnel.

6. Procédé selon au moins l'une des revendications 1 à 5, **caractérisé en ce que** l'acide acétique est utilisé en des quantités de 0,5 à 6,0 % en poids, de préférence de 1,5 à 3,5 % en poids, par rapport à la proportion totale de silicone du système réactionnel.

7. Procédé selon au moins l'une des revendications 1 à 6, **caractérisé en ce que** l'anhydride acétique est utilisé en des quantités de 0,13 à 33 % en poids, de préférence en des quantités de 0,69 à 6,9 % en poids, par rapport à la proportion totale de silicone du système réactionnel.

8. Procédé de recyclage valorisant selon au moins l'une des revendications 1 à 7, **caractérisé en ce que**, comme acides de Brønsted, on utilise des acides protoniques ayant une valeur de pKa inférieure à -1,30, tels que de préférence l'acide nitrique, l'acide méthanesulfonique et/ou l'acide p-toluènesulfonique, de préférence des acides protoniques ayant une valeur de pKa inférieure à -2,90, tels que de préférence l'acide sulfurique concentré, de façon particulièrement préférée des acides protoniques ayant une valeur de pKa inférieure à -4,90, tels que de préférence les acides perfluoroalcanesulfoniques comme l'acide heptafluoropropanesulfonique, l'acide pentafluoroéthanesulfonique, l'acide trifluorométhanesulfonique, puis l'acide perchlorique et/ou l'acide chlorosulfonique, les acides perfluoroalcanesulfoniques étant notamment préférés, et l'acide trifluorométhanesulfonique étant tout particulièrement préféré, ainsi que de préférence des résines échangeuses d'ions d'acide sulfonique ou d'acide perfluoroalkylsulfonique.

9. Procédé de recyclage valorisant selon au moins l'une des revendications 1 à 8, **caractérisé en ce que** la digestion thermique est effectuée sous pression normale (1013 hPa), sous dépression ou sous surpression et, de façon particulièrement préférée, sous pression normale.

10. Procédé de recyclage valorisant selon au moins l'une des revendications 1 à 9, **caractérisé en ce que** les silicones en fin de vie comprennent des colles silicones et/ou des mastics silicones, concernent de préférence des cartouches de colles silicones et/ou de mastics silicones, et concernent en particulier des résidus de colles silicones et/ou de mastics silicones dans et/ou sur des récipients en polyéthylène, de préférence comprenant du HDPE et/ou du LDPE.

11. Procédé de recyclage valorisant selon au moins l'une des revendications 1 à 10 utilisant du polyéthylène contaminé par de la silicone, en particulier des déchets de polyéthylène contaminés par de la silicone, pour la production de siloxanes acides, complètement équilibrés, porteurs de groupes acétoxy, présentant des longueurs de chaîne supérieures à 3 atomes de silicium, avec récupération de polyéthylène sensiblement pur.
